# EUROPÄISCHE PATENTSCHRIFT

(11) **EP 1 657 413 B1**
(45) Veröffentlichungstag und Bekanntmachung des Hinweises auf die Patenterteilung: **30.12.2009**
(21) Anmeldenummer: 05007919.3
(22) Anmeldetag: 12.04.2005
(51) Int. Cl.: F01N 7/18, F16L 33/04, F16L 21/06

(54) **Vorrichtung zur Verbindung zweier Abgas führender Rohre**
Device for connecting two exhaust pipes
Dispositif de raccordement de deux tuyaux d'échappement

(30) Priorität: 11.11.2004 DE 202004017501 U
(43) Veröffentlichungstag der Anmeldung: 17.05.2006
(73) Patentinhaber: Kirchhoff GmbH & Co. KG., 58553 Halver (DE)
(72) Erfinder: Esser, Karl, 58566 Kierspe (DE)
(74) Vertreter: Köchling, Conrad-Joachim

(56) Entgegenhaltungen:
- DE-A1- 4 216 921
- DE-U1- 8 414 028
- DE-U1- 8 533 204
- US-A- 3 944 265

## Beschreibung

Die Erfindung betrifft eine Vorrichtung zur Verbindung zweier Abgas führender Rohre für Brennkraftmaschinenauspuffanlagen, bestehend aus einer rohrförmigen Klemmhülse mit einem vorzugsweise mäanderartig verwinkelten Längsschlitz, einer die Klemmhülse umgebenden längsgeschlitzten Muffe, wobei der Längsschlitz der Muffe gegenüber dem Längsschlitz der Klemmhülse in Umfangsrichtung versetzt angeordnet ist, sowie auf die Muffenenden einwirkenden Rohrschellen mit Spannschrauben, wobei die Rohrschellen abgewinkelte Randteile aufweisen, die jeweils von einer Spannschraube durchgriffen sind.

Sämtliche Bestandteile bestehen aus Metall, vorzugsweise aus Stahl.

Eine derartige Vorrichtung ist aus der DE 84 14 028 U1 bekannt. Solche Vorrichtungen haben sich im Stand der Technik zwar bewährt, jedoch besteht ein Bedarf, solche Vorrichtungen noch kostengünstiger zur Verfügung zu stellen. Darüber hinaus soll die Flexibilität der Rohrschellen verbessert werden, um beim Anziehen der Rohrschellen sowohl eine Deformation der Muffe als auch der Klemmhülse zu vermeiden und eine satte Anlage der Rohrschellen am Mantel der Muffe zu erreichen.

Eine gattungsgemäße Vorrichtung ist aus der DE 85 33 204 U1 bekannt.

Um eine Solche Vorrichtung besonders kostengünstig gestalten zu können, wird vorgeschlagen, dass die Rohrschellen von einem Bereich nahe der Randteile bis etwa zur Mitte der Muffe verlaufende randseitig von der Muffe weg gerichtet abragende Ränder aufweisen, deren Höhe größer als die Wandstärke der Rohrschellen ist, und dass jede Rohrschelle aus zwei Schellenbügelteilen besteht, die jeweils die Muffe um weniger als den halben Umfang umgeben, wobei die ersten Enden der Schellenbügelteile abgewinkelt und von einer Spannschraube durchgriffen sind, während die zweiten Enden der Schellenbügelteile mit dem Mantel der Muffe mechanisch, formschlüssig, kraftschlüssig und/oder stoffschlüssig verbunden sind.

Gemäß dieser Ausbildung erhalten die Rohrschellen zwar in dem Bereich, in dem sie die Muffe umgreifen, eine höhere Stabilität, so dass sie sich beim Anspannen der Spannschrauben großflächig an die Muffe satt anlegen können und bei weiterem Anziehen der Spannschrauben sich auch relativ zur Muffe verschieben können, dennoch wird im Übergangsbereich zwischen dem die Muffe umgreifenden Bereich der Rohrschelle zu den abgewinkelten Randteilen eine gewisse Elastizität erreicht, die das Spannverhalten verbessert und das Eindrücken von Dellen oder dergleichen in den Muffenmantel verhindert. Zudem ist eine solche Rohrschelle kostengünstiger zu fertigen als bisher übliche Rohrschellen dieser Art, da bei bisherigen Rohrschellen der abgewinkelte Randteil nicht nur in dem die Muffe umgreifenden Bereich, sondern durchlaufend auch in den abgewinkelten Randteilen vorgesehen ist, was fertigungstechnisch bei der Umformung des Teiles aus Blech problematisch ist.

Um eine besonders kostengünstige Gestaltung zu erreichen, wird die im Anspruch 1 angegebene Ausbildung vorgeschlagen. Die Rohrschellen, die zur Fixierung dienen, sind nur so groß dimensioniert, dass jeweils ein Rohrschellenteil etwa ein Viertel des Umfanges der Muffe umgreift. Das restliche Material, welches bisher im Stand der Technik zum vollständigen Umgreifen der Muffe erforderlich war, kann ersatzlos entfallen. Es wird dadurch eine erhebliche Kosteneinsparung erreicht. Um die Funktion der Vorrichtung zu gewährleisten sind die zweiten Enden der Schellenbügelteile mit dem Mantel der Muffe verbunden, so dass beim Anspannen der vorstehenden Teile die notwendige Kraft aufgebracht werden kann.

Bevorzugt ist dabei vorgesehen, dass die abgewinkelten Randteile ebenfalls randseitig von einander weg gerichtet abragenden Rändern umgeben sind, wobei die Ränder nur bis etwa in die Nähe der Biegelinie verlaufen, die durch den Übergang von der Rohrschelle zum abgewinkelten Randteil gebildet ist.

Hierdurch werden die Randteile, die mittels der Spannschrauben angezogen werden, zwar versteift, jedoch ist weiterhin die Fertigung gegenüber einer vorbekannten Ausbildung dieser Art vereinfacht und die oben beschriebene Wirkungsweise verbessert.

Um zu erreichen, dass beim Anziehen der Rohrschelle mittels der Spannschrauben zunächst die Rohrschellen beim Anspannen mit der radial außen liegenden Randkante zur Anlage kommen und beim weiteren Anspannen sich dann lediglich im unteren Bereich, der der Muffe benachbart ist, noch annähern können, und um eine solche Ausbildung kostengünstig zu gestalten, wird vorgeschlagen, dass die freien Enden der abgewinkelten Randteile der Rohrschelle zueinander vorragende Erhebungen, Sicken oder Warzen aufweisen, so dass beim Spannen der Rohrschellen erst die freien Enden mit den Erhebungen sich aneinander abstützen und erst nachfolgend die dem Schellenbügel benachbarten Enden der Abwinklungen einander angenähert werden, bis maximal zur Anlage auch dieser Bereiche aneinander.

Das Andrücken solcher Erhebungen, Sicken oder Warzen ist kostengünstig durchzuführen. Durch die erfindungsgemäße Ausbildung wird ein frühzeitiges Verkanten der Rohrschellen verhindert, was zu bleibenden Deformationen von Muffe und/oder Klemmhülse und/oder eingespannten Rohren führen könnte.

Die erfindungsgemäße Ausbildung ermöglicht es zudem, ein dünneres Ausgangsmaterial zur Herstellung der Rohrschellen einzusetzen. Vorzugsweise ist dabei vorgesehen, dass die zweiten Enden der Schellenbügelteile durch Druckfügeverbindung mit der Muffe verbunden sind.

Alternativ oder zusätzlich kann auch vorgesehen sein, dass die zweiten Enden der Schellenbügelteile durch Schweißpunkte mit der Muffe verbunden sind.

Auch kann vorgesehen sein, dass die Klemmhülse in der Muffe unverschieblich und/oder unverdrehbar gehalten ist.

Die Unverschieblichkeit beziehungsweise Unverdrehbarkeit kann beispielsweise dadurch erreicht werden, dass ein Schweißpunkt zur Verbindung von Muffe und Klemmhülse gesetzt wird oder dass auch diese Teile durch Druckfügeverbindungspunkte miteinander verbunden werden.

Eine zudem bevorzugte Ausbildung wird darin gesehen, dass der verwinkelte Längsschlitz der Klemmhülse, der als geradlinig durchgehender Längsschlitz mit mittiger breiter Zunge an der einen Randkante und passender Ausnehmung in der gegenüberstehenden Randkante ausgebildet ist, abfallfrei geschnitten ist.

Die Ausbildung eines entsprechend verwinkelten Längsschlitzes ist aus der DE 85 33 204 U1 an sich bekannt. Bisher ist es üblich, dass solche Hülsen dadurch geformt werden, dass ein ebener Blechzuschnitt an seinen in Längsrichtung verlaufenden Randkanten mittels eines Stempels abgestanzt wird, um die Zunge und die entsprechende Ausnehmung auszubilden. Anschließend kann das so gefertigte Teil zu einer Hülse gerollt werden. Bei dieser Vorgehensweise entsteht zwangsläufig ein Materialabfall, der einerseits entsorgt werden muss und andererseits Kostennachteile mit sich bringt, weil das Ausgangsmaterial nicht vollständig zur Formung der Klemmhülse genutzt wird. Durch die erfindungsgemäße Ausbildung wird ein Materialabfall vermieden, so dass das Ausgangsmaterial zu 100% genutzt werden kann und eine entsprechende Materialeinsparung erreicht wird. Zudem ist die Entsorgung von anfallendem Stanzabfall vermieden.

Besonders bevorzugt ist hierbei vorgesehen, dass der verwinkelte Längsschlitz derart eng toleriert ist, dass die Zunge spaltfrei oder nahezu spaltfrei in die Ausnehmung einschiebbar oder eingeschoben ist.

Zudem ist besonders bevorzugt vorgesehen, dass die Zunge zu ihrem freien Ende geringfügig konvergierende Seitenrandkanten aufweist, in einem Winkel von etwa 3° zur Umfangrichtung der Hülse, und die Ausnehmung zu ihrem freien Auslauf geringfügig divergierende Seitenrandkanten aufweist, im gleichen Winkel wie die Zunge, im Winkel von etwa 3° zur Umfangsrichtung der Hülse.

Durch diese Anordnung wird erreicht, dass beim Anspannen der Vorrichtung mittels der Rohrschellen die Zunge sicher in die Ausnehmung gleitet und die Seitenrandkanten von Zunge und Ausnehmung dichtend ineinander geführt sind, wenn sich der Montagesollzustand beim Anspannen der Rohrschellen einstellt. Hieraus resultiert eine höhere Dichtigkeit der Gesamtvorrichtung, so dass anfallende Leckluft auf unter 5 Liter pro Zeiteinheit begrenzt werden kann.

Auf Grund der erfindungsgemäßen Gestaltung ist es zudem möglich, dass die Hülse und die Muffe aus Material mit einer Dicke von höchstens 0,7 mm ± Toleranzen gefertigt sind.

Hierdurch wird eine wesentliche weitere Kostenersparnis gegenüber der herkömmlichen Ausbildung erzielt.

Ein Ausführungsbeispiel der Erfindung ist in der Zeichnung dargestellt und im Folgenden näher beschrieben. Es zeigt:

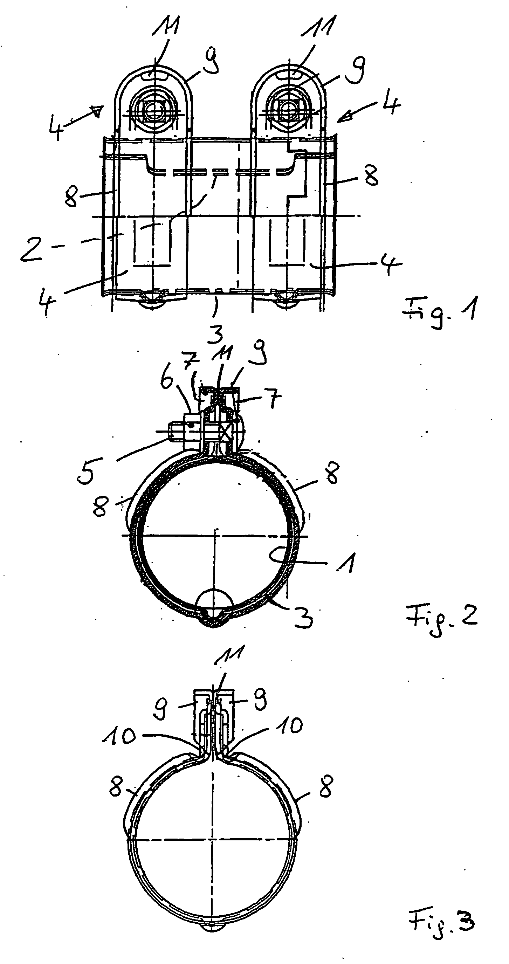

- Figur 1: Eine nicht erfindungsgemäße Vorrichtung in Seitenansicht;
- Figur 2: desgleichen im Querschnitt gesehen;
- Figur 3: desgleichen in Stirnansicht;
- Figur 4: eine erfindungsgemäße Klemmhülse in Ansicht;
- Figur 5: das Ausgangsteil zur Herstellung einer Klemmhülse gemäß Figur 4;
- Figur 6: die in Eingriff befindlichen Teile der Klemmhülse bei der bestimmungsgemäßen Benutzung.

In den Zeichnungsfiguren ist eine Vorrichtung zur Verbindung zweier Abgas führender Rohre für Brennkraftmaschinenauspuffanlagen gezeigt. Sie besteht aus einer rohrförmigen Klemmhülse 1 mit einem vorzugsweise mäanderartig verwinkelten Längsschlitz 2, einer die Klemmhülse 1 umgebenden längsgeschlitzten Muffe 3, wobei der Längsschlitz der Muffe 3 gegenüber dem Längsschlitz 2 der Klemmhülse 1 in Umfangsrichtung versetzt angeordnet ist, sowie auf die Muffenenden einwirkenden Rohrschellen 4 mit Spannschrauben 5 und Spannmuttern 6. Bei den Spannschrauben 5 handelt es sich vorzugsweise um übliche Schlossschrauben.

Um eine solche Vorrichtung kostengünstig gestalten zu können und dennoch eine vorzügliche Funktion zu erreichen, weisen die Rohrschellen 4 abgewinkelte Randteile 7 auf, die jeweils von der Spannschraube 5 durchgriffen sind. Von einem Bereich nahe der Randteile 7 bis etwa zur Mitte der Muffe 3 sind randseitig von der Muffe 3 weg gerichtet ragende Ränder 8 vom Schellenbügel abgekantet, deren Höhe größer als die Wandstärke der Rohrschelle ist. Die abgewinkelten Randteile 7 weisen ebenfalls randseitig voneinander weggerichtet abragende Ränder 9 auf, wobei diese Ränder 9 nur bis etwa in die Nähe der Biegelinie 10 verlaufen, die durch den Übergang von der Rohrschelle 4 zum abgewinkelten Randteil 7 gebildet ist. Die freien Enden der abgewinkelten Randteile 7 weisen zueinander vorragende Erhebungen, Sicken oder Warzen 11 auf, so dass beim Spannen der Rohrschellen erst die freien Enden mit den Erhebungen 11 aneinander zur Anlage kommen und nachfolgend die dem Schellenbügel benachbarten Enden der Abwinklungen einander angenähert werden, bis maximal zur Anlage auch dieser Bereiche aneinander.

Erfindungsgemäß besteht jede Rohrschelle 4 aus zwei Schellenbügelteilen, die jeweils die Muffe 3 um weniger als den halben Umfang, vorzugsweise nur um etwa ein Viertel ihres Umfanges umgeben. Dabei sind die ersten Enden der Schellenbügelteile abgewinkelt und von der Spannschraube 5 durchgreifbar, während die zweiten Enden der Schellenbügel mit dem Mantel der Muffe 3 mechanisch, formschlüssig, kraftschlüssig oder stoffschlüssig verbunden sind.

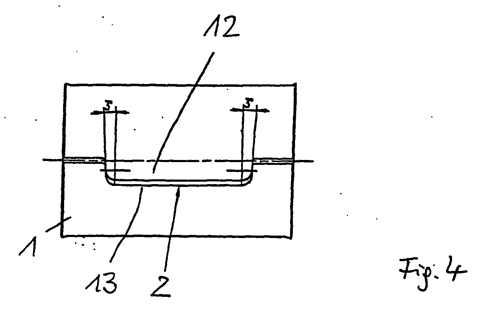

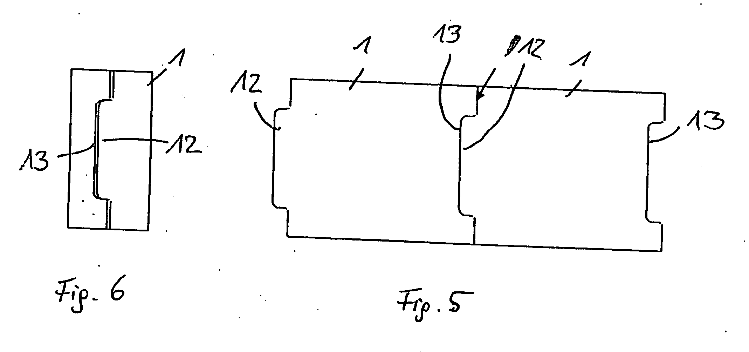

In Figur 4 bis 6 ist eine Besonderheit der Klemmhülse 1 gezeigt. Hierbei ist der verwinkelte Längsschlitz 2 der Klemmhülse 1 als gradlinig durchgehender Längsschlitz mit mittiger breiter Zunge 12 an der einen Randkante und passender Ausnehmung 13 an der gegenüberliegenden Randkante ausgebildet. Wie insbesondere aus Figur 5 und 6 ersichtlich, ist diese Klemmhülse 1 aus Bandmaterial gefertigt, wobei die Einzelteile abfallfrei geschnitten sind. Der verwinkelte Längsschlitz 2 ist derart eng toleriert, dass die Zunge 12 spaltfrei in die Ausnehmung 13 einschiebbar ist. Um das Spannen der Vorrichtung zu erleichtern und die Dichtigkeit zu erhöhen, weist die Zunge 12 zu ihrem freien Ende geringfügig konvergierende Seitenrandkanten auf, vorzugsweise in einem Winkel von etwa 3°, wie in der Figur 4 angegeben. Auch die Ausnehmung 13 ist entsprechend geformt, so dass sich die Seitenrandkanten zum freien Auslauf geringfügig divergierend erstrecken, vorzugsweise im gleichen Winkel von 3°.

## Patentansprüche

1. Vorrichtung zur Verbindung zweier Abgas führender Rohre für Brennkraftmaschinenauspuffanlagen, bestehend aus einer rohrförmigen Klemmhülse (1) mit einem vorzugsweise mäanderartig verwinkelten Längsschlitz (2), einer die Klemmhülse (1) umgebenden längsgeschlitzten Muffe (3), wobei der Längsschlitz der Muffe (3) gegenüber dem Längsschlitz (2) der Klemmhülse (1) in Umfangsrichtung versetzt angeordnet ist, sowie auf die Muffenenden einwirkenden Rohrschellen (4) mit Spannschrauben (5), wobei die Rohrschellen (4) abgewinkelte Randteile (7) aufweisen, die jeweils von einer Spannschraube (5) durchgriffen sind, **dadurch gekennzeichnet, dass** die Rohrschellen (4) von einem Bereich nahe der Randteile (7) bis etwa zur Mitte der Muffe (3) verlaufende randseitig von der Muffe (3) weg gerichtet abragende Ränder (8) aufweisen, deren Höhe größer als die Wandstärke der Rohrschellen ist, und dass jede Rohrschelle (4) aus zwei Schellenbügelteilen besteht, die jeweils die Muffe (3) um weniger als den halben Umfang umgeben, wobei die ersten Enden der Schellenbügelteile abgewinkelt und von einer Spannschraube (5) durchgriffen sind, während die zweiten Enden der Schellenbügelteile mit dem Mantel der Muffe (3) mechanisch, formschlüssig, kraftschlüssig und/oder stoffschlüssig verbunden sind.

2. Vorrichtung nach Anspruch 1, **dadurch gekennzeichnet, dass** die abgewinkelten Randteile (7) ebenfalls randseitig von einander weg gerichtet abragenden Rändern (9) umgeben sind, wobei die Ränder (9) nur bis in die Nähe der Biegelinie (10) verlaufen, die durch den Übergang von der Rohrschelle (4) zum abgewinkelten Randteil (7) gebildet ist.

3. Vorrichtung nach einem der Ansprüche 1 oder 2, **dadurch gekennzeichnet, dass** die freien Enden der abgewinkelten Randteile (7) der Rohrschelle (4) zueinander vorragende Erhebungen, Sicken oder Warzen (11) aufweisen, so dass beim Spannen der Rohrschellen (4) erst die freien Enden mit den Erhebungen (11) sich aneinander abstützen und erst nachfolgend die dem Schellenbügel benachbarten Enden der Abwinklungen (7) einander angenähert werden, bis maximal zur Anlage auch dieser Bereiche aneinander.

4. Vorrichtung nach einem der Ansprüche 1 bis 3, **dadurch gekennzeichnet, dass** die Schellenbügelteile die Muffe (3) um ein Viertel ihres Umfanges umgeben.

5. Vorrichtung nach Anspruch 4, **dadurch gekennzeichnet, dass** die zweiten Enden der Schellenbügelteile durch Druckfügeverbindung mit der Muffe (3) verbunden sind.

6. Vorrichtung nach Anspruch 4, **dadurch gekennzeichnet, dass** die zweiten Enden der Schellenbügelteile durch Schweißpunkte mit der Muffe (3) verbunden sind.

7. Vorrichtung nach einem der Ansprüche 1 bis 6, **dadurch gekennzeichnet, dass** die Klemmhülse (1) in der Muffe (3) unverschieblich und/oder unverdrehbar gehalten ist.

8. Vorrichtung nach einem der Ansprüche 1 bis 7, **dadurch gekennzeichnet, dass** der verwinkelte Längsschlitz (2) der Klemmhülse (1), der als geradlinig durchgehender Längsschlitz mit mittiger breiter Zunge (12) an der einen Randkante und passender Ausnehmung (13) in der gegenüberstehenden Randkante ausgebildet ist, abfallfrei geschnitten ist.

9. Vorrichtung nach Anspruch 8, **dadurch gekennzeichnet, dass** der verwinkelte Längsschlitz (2) derart eng toleriert ist, dass die Zunge (12) spaltfrei oder nahezu spaltfrei in die Ausnehmung (13) einschiebbar oder eingeschoben ist.

10. Vorrichtung nach einer der Ansprüche 8 oder 9, **dadurch gekennzeichnet, dass** die Zunge (12) zu ihrem freien Ende geringfügig konvergierende Seitenrandkanten aufweist, in einem Winkel von etwa 3° zur Umfangrichtung der Hülse (1), und die Ausnehmung (13) zu ihrem freien Auslauf geringfügig divergierende Seitenrandkanten aufweist, im gleichen Winkel wie die Zunge (12), im Winkel von etwa 3° zur Umfangsrichtung der Hülse (1).

11. Vorrichtung nach einem der Ansprüche 1 bis 10, **dadurch gekennzeichnet, dass** die Hülse (1) und die Muffe (3) aus Material mit einer Dicke von höchstens 0,7 mm ± Toleranzen gefertigt sind.

## Claims

1. Device for connecting two exhaust pipes for internal combustion engine exhaust systems, consisting of a tubular clamping piece (1) with a preferably meander-shape angled lengthwise slot (2), a lengthwise-slit sleeve (3) surrounding the clamping piece (1), wherein the lengthwise slot of the sleeve (3) is arranged in the circumferential direction offset in relation to the lengthwise slot (2) of the clamping piece (1), as well as pipe clamps (4) acting on the sleeve ends, with tightening screws (5), wherein the pipe clamps (4) have angled edge parts (7), which in each case are penetrated by a tightening screw (5), **characterized in that** the pipe clamps (4) have edges (8), whose height is greater than the pipe clamp wall thickness, running from a region close to the edge parts (7) approximately as far as the centre of the sleeve (3) projecting on the edge side in the direction away from the sleeve (3) and **characterized in that** each pipe clamp (4) consists of two clamp hoops, which in each case surround the sleeve (3) by less than half the circumference, wherein the first ends of the clamp hoops are angled and penetrated by a tightening screw (5), while the second ends of the clamp hoops are mechanically, positively, non-positively and/or integrally joined to the jacket of the sleeve (3).

2. Device according to claim 1, **characterized in that** an angled edge parts (7) on the edge side are likewise surrounded by edges (9) projecting in the direction away from each other, wherein the edges (9) run only into the proximity of the bend line (10), which is formed by the transition from the pipe clamp (4) to the angled edge part (7).

3. Device according to anyone of claims 1 or 2, **characterized in that** the free ends of the angled edge parts (7) of the pipe clamp (4) have peaks, beads or warts (11) protruding towards one another, so that when the pipe clamps (4) are tensioned only the peaks (11) of the free ends rest on one another and only subsequently the ends, adjacent to the clamp loop, of the angles (7) are drawn together at maximum until these regions also contact each other.

4. Device according to anyone of claims 1 to 3, **characterized in that** the clamp hoops surround the sleeve (3) over a quarter of its circumference.

5. Device according to claim 4, **characterized in that** the second ends of the clamp hoops are joined to the sleeve (3) by compression jointing.

6. Device according to claim 4, **characterized in that** the second ends of the clamp hoops are joined to the sleeve (3) by spot-welds.

7. Device according to anyone of claims 1 to 6, **characterized in that** the clamping piece (1) is held fixedly and/or non-rotatably in the sleeve (3).

8. Device according to anyone of claims 1 to 7, **characterized in that** an angled lengthwise slot (2) of the clamping piece (1), which is formed as straight, continuous lengthwise slot with central wide tongue (12) on one outer edge and suitable groove (13) in the opposite outer edge, is cut without wastage.

9. Device according to claim 8, **characterized in that** an angled lengthwise slot (2) has narrow tolerances so that the tongue (12) can be pushed or is pushed into the groove (13) gap-free or virtually gap-free.

10. Device according to anyone of claims 8 or 9, **characterized in that** the tongue (12) has lateral outer edges slightly converging towards its free end, at an angle of approximately 3° to the circumferential direction of the collet (1), and the groove (13) has lateral outer edges slightly diverging towards its open mouth, at the same angle as the tongue (12), at an angle of approximately 3° to the circumferential direction of the sleeve (1).

11. Device according to anyone of claims 1 to 10, **characterized in that** the collet (1) and the sleeve (3) are made from material with a maximum thickness of 0.7 mm ± tolerances.

## Revendications

1. Dispositif pour raccorder deux tuyaux conduisant les gaz d'échappement pour des systèmes d'échappement de moteurs à combustion interne, constitué d'une douille de serrage tubulaire (1) avec une fente longitudinale (2) anguleuse, de préférence en méandres, d'un manchon (3) longitudinalement fendu entourant la douille de serrage (1), sachant que la fente longitudinale du manchon (3) est disposée décalée en direction circonférentielle par rapport à la fente longitudinale (2) de la douille de serrage (1), et de colliers de serrage (4) agissant sur les extrémités du manchon et pourvus de vis de serrage (5), sachant que les colliers de serrage (4) présentent des parties marginales coudées (7) qui sont chacune traversées par une vis de serrage (5), **caractérisé en ce que** les colliers de serrage (4) présentent des bords (8), dont la hauteur est supérieure à l'épaisseur de paroi des colliers de serrage, qui s'étendent depuis une région proche des parties marginales (7) jusqu'environ au milieu du manchon (3) et qui dépassent du bord du manchon (3) en étant dirigés en éloignement de ce dernier, et **en ce que** chaque collier de serrage (4) est constitué de deux parties d'étrier qui entourent chacune le manchon (3) sur moins de la moitié de sa circonférence, sachant que les premières extrémités des parties d'étrier sont coudées et traversées par une vis de serrage (5), tandis que les secondes extrémités des parties d'étrier sont assemblées à l'enveloppe du manchon (3) mécaniquement, par engagement positif, à force et/ou par liaison de matière.

2. Dispositif selon la revendication 1, **caractérisé en ce que** les parties marginales coudées (7) sont elles aussi entourées par des bords (9) dépassant de leur bord en étant dirigés en éloignement mutuel, sachant que les bords (9) ne s'étendent que jusqu'à proximité de la ligne de pliage (10) qui est formée par la transition entre le collier de serrage (4) et la partie marginale coudée (7).

3. Dispositif selon la revendication 1 ou 2, **caractérisé en ce que** les extrémités libres des parties marginales coudées (7) des colliers de serrage (4) présentent des surélévations, des moulures ou des bossages (11) faisant saillie l'un vers l'autre, de sorte que, lors du serrage des colliers de serrage (4), les extrémités libres s'appuient d'abord l'une contre l'autre par les bossages (11), et ensuite seulement les extrémités des parties coudées (7) qui sont voisines de l'étrier du collier sont rapprochées l'une de l'autre, jusqu'à ce que, au maximum, ces régions s'appliquent également l'une contre l'autre.

4. Dispositif selon l'une des revendications 1 à 3, **caractérisé en ce que** les parties d'étrier entourent le manchon (3) sur un quart de sa circonférence.

5. Dispositif selon la revendication 4, **caractérisé en ce que** les secondes extrémités des parties d'étrier sont assemblées au manchon (3) par assemblage par pression.

6. Dispositif selon la revendication 4, **caractérisé en ce que** les secondes extrémités des parties d'étrier sont assemblées au manchon (3) par des points de soudure.

7. Dispositif selon l'une des revendications 1 à 6, **caractérisé en ce que** la douille de serrage (1) est maintenue dans le manchon (3) sans possibilité de translation et/ou sans possibilité de rotation.

8. Dispositif selon l'une des revendications 1 à 7, **caractérisé en ce que** la fente longitudinale anguleuse (2) de la douille de serrage (1), qui est réalisée sous forme de fente longitudinale rectilignement continue avec une large languette centrale (12) sur l'une des arêtes de bord et un évidement correspondant (13) dans l'arête de bord opposée, est réalisée par découpage sans chutes.

9. Dispositif selon la revendication 8, **caractérisé en ce que** la fente longitudinale anguleuse (2) est réalisée avec des tolérances tellement étroites que la languette (12) est ou peut être insérée quasiment sans jeu dans l'évidement (13).

10. Dispositif selon la revendication 8 ou 9, **caractérisé en ce que** la languette (12) présente des arêtes de bords latéraux légèrement convergentes en direction de son extrémité libre, sous un angle d'environ 3° par rapport à la direction circonférentielle de la douille (1), et l'évidement (13) présente des arêtes de bords latéraux légèrement divergentes en direction de son débouché libre, sous le même angle que la languette (12), à savoir un angle d'environ 3° par rapport à la direction circonférentielle de la douille (1).

11. Dispositif selon l'une des revendications 1 à 10, **caractérisé en ce que** la douille (1) et le manchon (3) sont fabriqués en un matériau ayant une épaisseur d'au plus 0,7 mm ± les tolérances.
